# DEMANDE DE BREVET EUROPEEN

(11) **EP 1 449 418 A1**
(43) Date de publication de la demande: **25.08.2004**
(21) Numéro de dépôt: 04360015.4
(22) Date de dépôt: 19.02.2004
(51) Int. Cl.: A01B 15/14, A01B 3/46

(54) **Charrue réversible semi-portée**

(30) Priorité: 19.02.2003 FR 0302196
(71) Demandeur: Kuhn-Huard S.A., 44142 Chateaubriant Cedex (FR)
(72) Inventeur: Paugam, Denis, 44110 Chateaubriant (FR); Gabard, Jean-Noel, 44660 Rouge (FR); Perrinel, Christian, 44110 Chateaubriant (FR)
(74) Mandataire: Andres, Jean-Claude

(57) **Abrégé**

Charrue (1) réversible semi-portée formée par :
* un avant-train (2) destiné à être lié à un véhicule moteur et
* un arrière-train (3) comportant :
   ■ une roue d'appui (8),
   ■ un timon (10) lié à ladite roue d'appui (8) au moyen d'une articulation arrière (11) et d'une fusée de roue (21), ladite articulation arrière (11) comportant un premier et un deuxième axes (11h, 11v), et
   ■ un bâti (12) équipé de corps de labour (7), ledit bâti (12) est lié à ladite fusée de roue (21) au moyen d'une articulation pivot (30),
caractérisée par le fait que l'axe (30a) de l'articulation pivot (30), liant ledit bâti (12) à ladite fusée de roue (21), est concourant à un des axes (11h, 11v) de ladite articulation arrière (11).

## Description

La présente invention se rapporte au domaine technique général des charrues et concerne plus particulièrement des charrues semi-portées réversibles. Cette charrue réversible semi-portée est formée par un avant-train destiné à être lié à un véhicule moteur et un arrière-train comportant une roue d'appui, un timon lié à ladite roue d'appui au moyen d'une articulation arrière et d'une fusée de roue, ladite articulation arrière comportant un premier et un deuxième axes. Ledit arrière-train comportant encore un bâti équipé de corps de labour, ledit bâti est lié à ladite fusée de roue au moyen d'une articulation pivot.

Il est connu dans l'état de la technique différentes charrues de ce type et notamment la charrue décrite dans le document **FR 2 657 493**. Ce dernier présente une charrue semi-portée réversible constituée d'un avant-train et d'un arrière-train. L'arrière-train de ladite charrue connue comporte entre autres, un bâti supportant des corps de labour, un timon et une roue d'appui. Le bâti est relié au timon par l'intermédiaire d'un boîtier de retournement. Ledit boîtier de retournement est, pour sa part, articulé sur le bâti et sur l'avant-train via une articulation de liaison respective. Le bâti est lié à la roue d'appui par l'intermédiaire d'un bras articulé à ses deux extrémités. Ledit timon est relié à la fois à l'avant-train et à la roue d'appui par l'intermédiaire d'articulations de liaison correspondantes. Cette charrue réversible est encore équipée d'un système de réglage de la largeur de travail des corps de labour.

Le bâti est lié à la roue d'appui au moyen d'une articulation arrière. Cette articulation arrière comporte, dans la configuration de transport, une articulation d'axe sensiblement vertical et une articulation d'axe plus ou moins horizontal, par rapport à la direction d'avance en transport. Le bras est lié audit bâti par l'intermédiaire d'une articulation pivot présentant un axe sensiblement horizontal. L'articulation arrière est disposée dans le voisinage des bras de roue alors que ladite articulation pivot est située au plus près dudit bâti. Ladite articulation pivot est encore disposée de manière optimale au point le plus proche de la roue d'appui et du bâti. Ces deux articulations sont donc assez éloignées l'une de l'autre.

Lorsque la charrue est dans sa configuration de transport, celle-ci à tendance à basculer à droite ou à gauche par rapport à la direction d'avance lors de la prise de virage ou lors du retournement en bout de champ. Le mouvement de balourd est lié essentiellement à l'inertie que prennent le bâti et les corps de labour. L'effort lié au balourd est donc relativement important lorsque la charrue aborde les virages. Cet effort est transmis à l'articulation arrière par l'intermédiaire de l'articulation pivot, celle-ci est donc très sollicitée lors de déplacement de la charrue sur la route ou dans les champs dans la configuration de transport.

La présente invention a pour but de s'affranchir des inconvénients rencontrés dans l'état de la technique. Elle doit notamment proposer une charrue présentant une cinématique simple et plus stable lors des manoeuvres de transport dans le champ et du transport sur route.

Conformément à la présente invention, une importante caractéristique consiste en ce que l'axe de l'articulation pivot, liant ledit bâti à ladite fusée de roue, est concourant à un des axes de ladite articulation arrière.

Cette disposition permet entre autres de rapprocher l'articulation pivot de l'articulation arrière et par conséquent de concentrer les articulations au niveau de l'articulation arrière. Cette cinématique permet de mieux résister aux efforts dus à l'inertie et donc au balourd engendré dans les virages.

D'autres particularités et avantages de l'invention ressortiront plus en détail à la lecture de la description, donnée ci-après, qui se réfère aux dessins annexés qui représentent, à titre d'exemples non limitatifs, une forme de réalisation de l'invention. Dans ces dessins :
- la figure 1 représente une vue latérale d'une charrue réversible semi-portée, conforme à l'invention, dans une position de travail,
- la figure 2 représente une vue latérale de la charrue de la figure 1 dans une position de transport,
- la figure 3 représente une vue de dessus de la charrue de la figure 1,
- la figure 4 représente, à une plus grande échelle, une partie de la charrue de la figure 1,
- la figure 5 représente, à plus grande échelle, un éclaté de l'articulation arrière lorsque la charrue est dans une position de travail,
- la figure 6 représente une vue en coupe de l'articulation arrière lorsque la charrue est dans une position de transport,
- la figure 7 représente, à plus grande échelle, le mécanisme de commande de la largeur de coupe des corps de labour de la charrue.

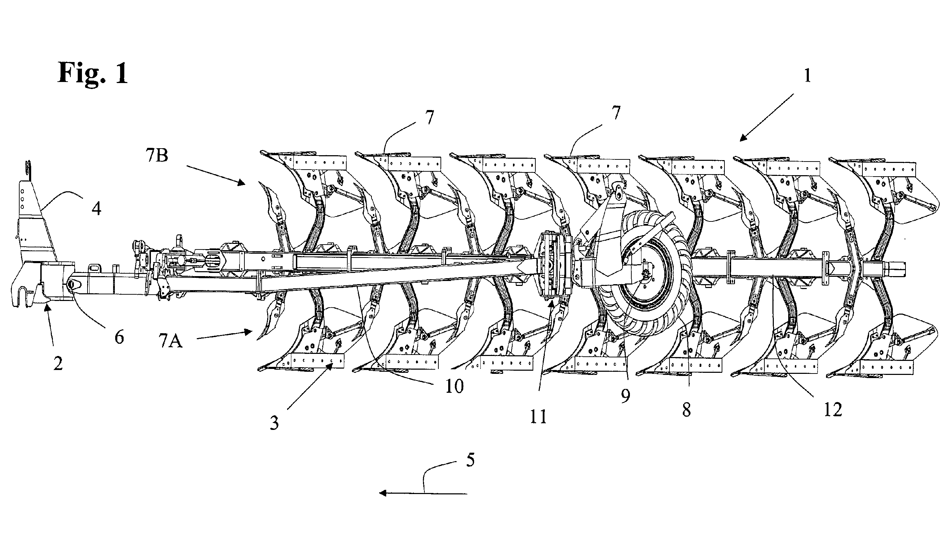

La charrue (1) représentée sur les figures 1 à 3 est une charrue comportant dans les grandes lignes un avant-train (2) et un arrière-train (3). L'avant-train (2) comporte, selon l'exemple de réalisation représenté, une structure d'attelage (4) qui est liée à un dispositif d'attelage (non représenté) d'un tracteur (non représenté). Ledit tracteur permet de déplacer ladite charrue (1) suivant une direction et un sens d'avance indiqué par la flèche (5). D'une manière connue de l'homme de l'art, l'avant-train (2) est lié à l'arrière-train (3) au moyen d'un cardan (6). L'arrière-train (3) supporte, pour sa part, des corps de labour (7) destinés à travailler une bande de terre.

Dans la suite de la description, les notions suivantes "avant", "arrière", "devant" et "derrière" sont définies par rapport au sens d'avance (5) indiqué par la flèche de la direction d'avance (5) et les notions "droite" et "gauche" sont définies en regardant la charrue (1), de l'arrière, dans le sens d'avance (5).

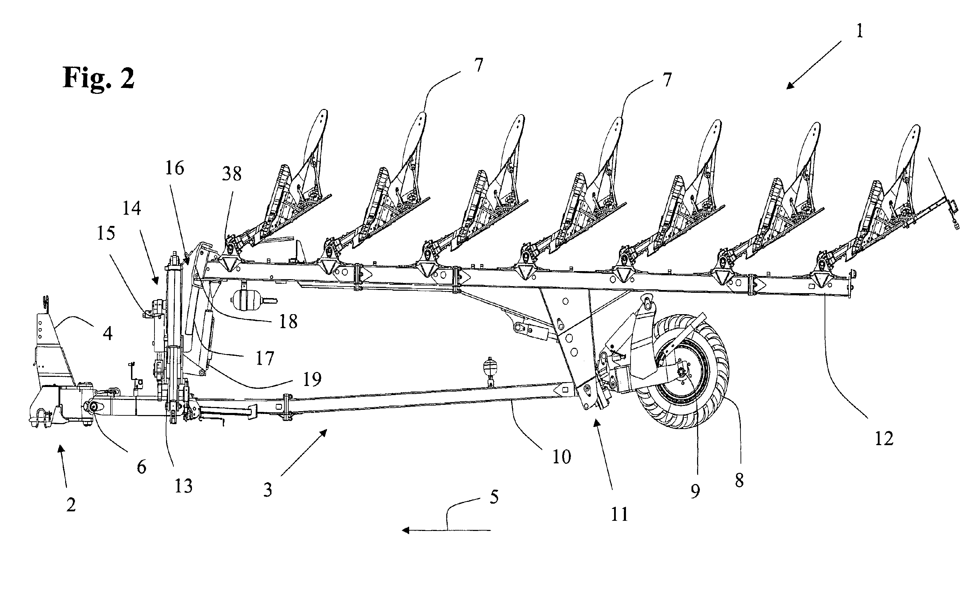

En se reportant aux figures 1 et 2, on voit que la charrue (1) à laquelle s'applique l'invention est une charrue réversible. Cette charrue réversible comportant un nombre important de corps de labour (7), l'arrière-train (3) de la charrue (1) est doté d'une roue d'appui (8) de sorte que la charrue (1) est semi-portée. Ladite roue d'appui (8) roule sur le sol et pivote autour d'un axe (9) plus ou moins horizontal et sensiblement perpendiculaire à la direction d'avance (5). L'orientation de l'axe (9) de la roue d'appui (8) est sensiblement identique à l'orientation dudit tracteur.

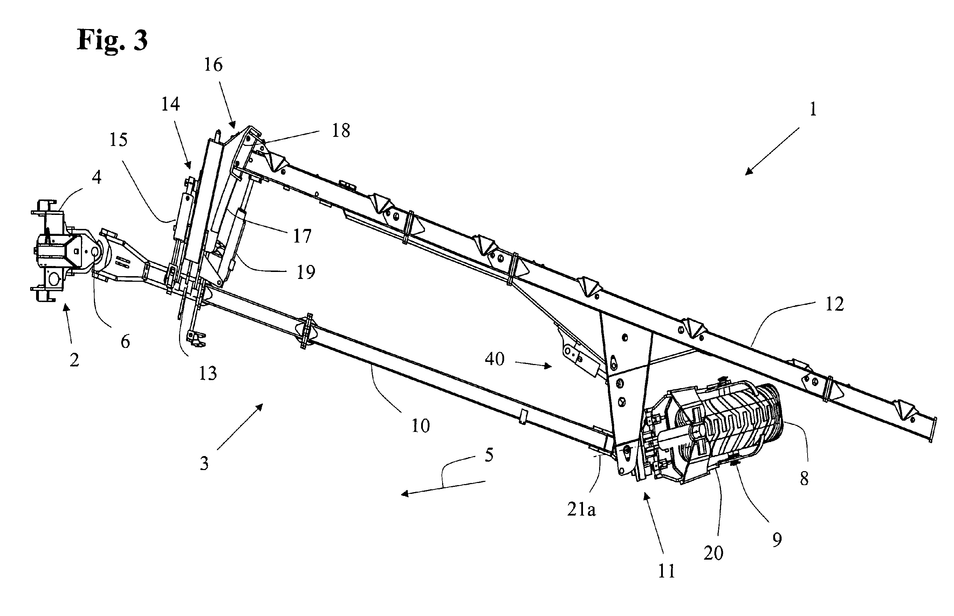

L'arrière-train (3) est porté par un timon (10) qui prend appui vers l'avant par l'intermédiaire du cardan (6) sur la structure d'attelage (4) et à l'arrière par l'intermédiaire d'une articulation arrière (11) sur ladite roue d'appui (8). L'arrière-train (3) est essentiellement constitué d'un bâti (12) sur lequel lesdits corps de labour (7) sont fixés. Le bâti (12) est lié à la partie avant dudit timon (10), via une articulation avant (13), à un boîtier de retournement (14). L'articulation avant (13) et l'articulation arrière (11) comportent chacune un axe longitudinal au moins sensiblement horizontal et sensiblement parallèle à la direction d'avance (5) dans la configuration de transport. Ledit boîtier de retournement (14) disposé à l'avant de l'arrière-train (3), réalise le pivotement de la charrue (1). Le boîtier de retournement (14) est constitué avantageusement de deux vérins hydrauliques (15) à double effet. Les vérins de retournement (15) sont articulés à l'une de leurs extrémités audit timon (10) et à leurs autres extrémités audit boîtier de retournement (14) au moyen d'articulations respectives d'axe dirigé vers l'avant. Grâce à cet agencement et en pivotant d'environ 180° autour desdites articulations avant et arrière (13, 11), ledit bâti (12) peut ainsi occuper au moins deux positions de travail. Par contre en ne pivotant que de 90°, ledit bâti (12) passe d'une des positions de travail à une position de transport. Pour une raison de clarté et de simplification de dessin, les corps de labour (7) ne sont pas représentés sur la figure 3.

D'après les figures, les corps de labour (7) sont disposés équitablement sur toute la longueur dudit bâti (12). D'une manière préférentielle, lesdits corps de labour (7) sont encore répartis suivant deux groupes (7A ; 7B), chacun desdits groupes (7A ; 7B) étant actif dans une position de travail respective. A la lumière de la figure 1, on voit que le premier groupe de corps de labour (7A) est situé, selon la position représentée, sous le bâti (12), alors que le deuxième groupe (7B) est situé au-dessus dudit bâti (12). On notera encore que les corps de labour du premier groupe (7A) sont formés de telle sorte qu'ils déversent la terre vers la droite. Les corps de labour du deuxième groupe (7B) sont, quant à eux, formés de telle sorte qu'ils déversent la terre vers la gauche. A la lumière de la figure 2 représentant la charrue (1) dans sa position de transport, les deux groupes (7A ; 7B) sont situés approximativement dans un plan sensiblement horizontal et avantageusement au-dessus dudit bâti (12).

Le bâti (12) est lié audit boîtier de retournement (14) au moyen d'un dispositif de réglage du déport (16), visible sur la figure 2. Le dispositif de réglage du déport (16), tel que représenté sur les figures, est formé par une glissière (17) et une chape de déport (18). Ladite glissière (17) est liée audit boîtier de retournement (14) et la chape de déport (18) est liée audit bâti (12). Ledit dispositif de réglage du déport (16) permet avantageusement d'adapter la position du premier corps de labour (7), à l'avant dudit bâti (12), à l'entre-pneus du tracteur. Le dispositif de réglage du déport (16) comporte de ce fait un vérin de réglage du déport (19). Ce dernier est articulé à la fois sur ledit boîtier de retournement (14) et sur ledit bâti (12). Le dispositif de réglage du déport (16) étant à la portée de l'homme de l'art, il ne sera pas décrit davantage.

Tel que visible sur les figures 1 à 4, lors du travail comme lors du transport, l'arrière-train (3) de la charrue (1) est soutenu par ladite roue d'appui (8). Cette roue d'appui (8) est disposée latéralement par rapport audit bâti (12). La roue d'appui (8) est liée à ladite articulation arrière (11) via des bras de roue (20) et une fusée de roue (21). Les bras de roue (20) sont disposés de part et d'autre de la roue d'appui (8) et une de leurs extrémités est liée à l'axe de rotation (9). L'autre extrémité est, quant à elle, liée à la fusée de roue (21) au moyen d'une première articulation (22). Les deux bras de roue (20) sont liés l'un à l'autre via une fourche (23) disposée sensiblement perpendiculairement audits bras de roue (20) et dirigée vers le haut. Cette fourche (23) est liée à ladite fusée de roue (21) par l'intermédiaire d'un vérin (24) gérant le relevage de la charrue (1).

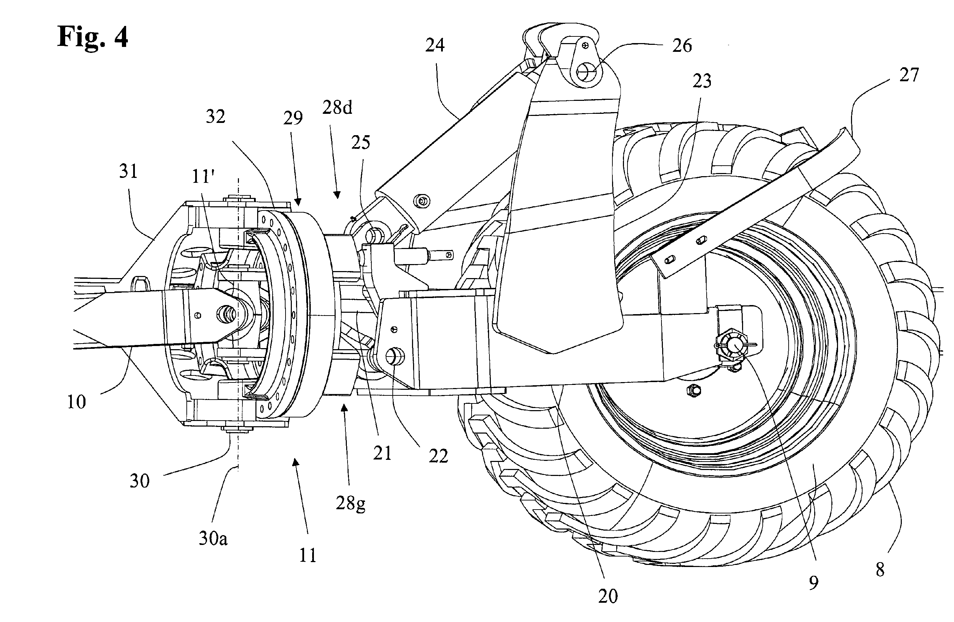

Selon l'exemple de réalisation représenté sur la figure 4, le vérin de relevage (24) est lié, d'une part, à la fusée de roue (21) via une deuxième articulation (25) d'axe longitudinal au moins sensiblement horizontal et, d'autre part à la fourche (23) via une troisième articulation (26) d'axe longitudinal au moins sensiblement horizontal. Les articulations (22, 25, 26) sont avantageusement parallèles à l'axe de rotation (9) de la roue d'appui (8). On remarquera que les quatre articulations (9, 22, 25, 26) sont perpendiculaires à la direction d'avance (5) et sont des articulations du type pivot. Les bras de roue (20), la fusée de roue (21), le vérin de relevage (24) et la fourche (23) forment sensiblement un quadrilatère.

Chaque bras de roue (20) est encore équipé d'un organe de nettoyage (27) évitant à la roue d'appui (8) de s'encrasser et par conséquent de garantir une profondeur de labour homogène et conforme au réglage établit par l'utilisateur.

D'une manière avantageuse, le réglage de la profondeur de travail des corps de labour (7) est effectué via le vérin de relevage (24) et via au moins un dispositif d'appui (28). Le vérin de relevage (24) est avantageusement du type simple effet. L'amplitude de pivotement des bras de roue (20) autour de ladite première articulation (22) est limitée par au moins un desdits dispositif d'appui (28). Le dispositif d'appui (28) est avantageusement réglable et est formé par tous moyens techniques connus, par exemple un moyen vis/écrou. La vis est montée dans un écrou qui est lié au bras de roue (20) respectif. Chaque vis est destinée à venir en contact avec une butée.

La charrue (1) comporte, d'une manière préférentielle, un dispositif d'appui (28d) pour le labour à droite et un dispositif d'appui (28g) pour le labour à gauche. Le dispositif d'appui droit (28d) étant actif lorsque les corps de labour (7A) sont en travail et le dispositif d'appui gauche (28g) étant actif lorsque les corps de labour (7B) sont dans leur position de travail. Un avantage appréciable est obtenu par l'emploi d'un dispositif d'appui respectif (28d, 28g) pour le labour à droite et pour le labour à gauche. L'utilisateur peut ainsi procéder à un réglage dissymétrique de la profondeur de labour de la charrue (1).

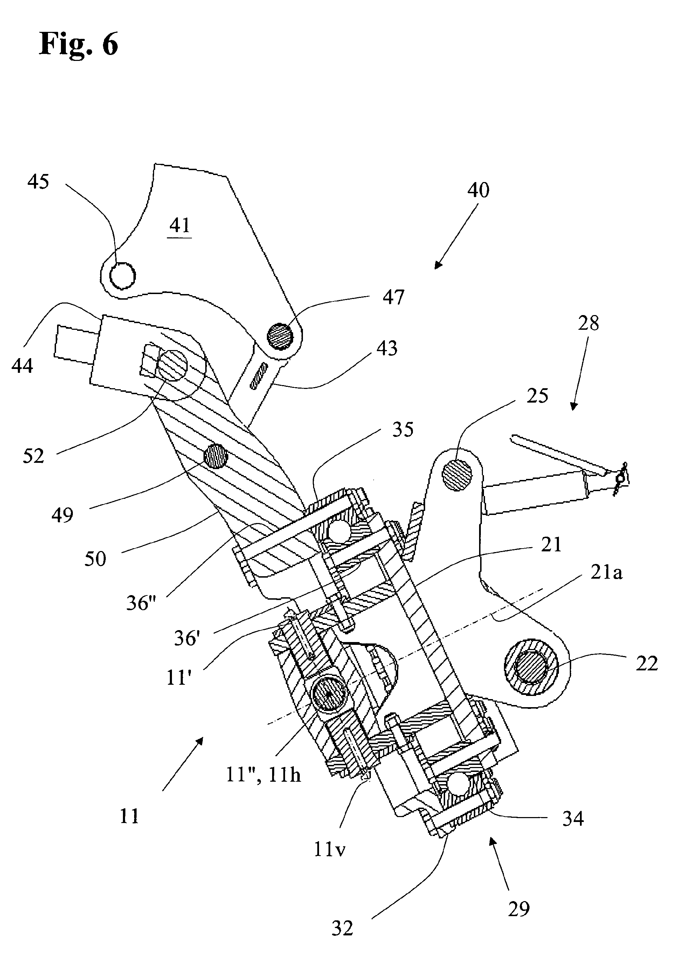

A la lumière des figures 4, 5 et 6, le timon (10) est lié à ladite fusée de roue (21) via l'articulation arrière (11). L'articulation arrière (11) est, d'une manière préférentielle, une articulation du type cardan (11'). Cette articulation du type cardan présente deux axes (11h, 11v) orthogonaux. Lesdits axes (11h, 11v) de l'articulation cardan (11') sont sécants et se coupent au centre de l'articulation cardan (11') en un point (11"). Dans les diverses positions de travail, le premier axe (11h) sensiblement horizontal relie la partie arrière dudit timon (10) à l'articulation cardan (11') et le deuxième axe (11v) sensiblement vertical relie la fusée de roue (21) à l'articulation cardan (11'). Les deux axes (11h, 11v) sont sensiblement perpendiculaires à la direction d'avance (5). Dans la configuration de transport par contre, le premier axe (11h) est plutôt vertical et le deuxième axe (11v) est plutôt horizontal. La figure 6 représente une vue en coupe de l'articulation arrière (11) suivant un plan vertical passant par l'axe (11v) lorsque la charrue (1) est dans sa configuration de transport.

Dans une configuration de travail classique le tracteur, circulant avec deux de ses roues dans un sillon, peut être orienté d'environ 10° par rapport à l'horizontal. Cette orientation est également celle de l'axe de rotation (9) de la roue d'appui (8). Ainsi, l'articulation cardan (11') présente un premier axe (11h) plus ou moins horizontal et parallèle audit axe de rotation (9), et un deuxième axe (11v) plus ou moins vertical.

Dans une configuration de travail particulière, par exemple le labour hors raie, le tracteur circule avec ses quatre roues sur le sol à labourer, et n'est donc pas incliné par rapport à l'horizontal. Dans ce cas, l'axe de rotation (9) de la roue d'appui (8) et le premier axe (11h) sont horizontaux et, le deuxième axe (11v) est vertical.

Lors du passage de la position de labour à droite à la position du labour à gauche, le bâti (12) équipé des corps de labour (7) pivote autour dudit timon (10) via un axe virtuel. Cet axe virtuel est connu de l'homme de l'art, il n'est pas représenté sur les figures. La fusée de roue (21) présente un axe longitudinal (21a) dirigé vers l'avant. Cet axe longitudinal (21a) est avantageusement concourant aux axes (11h, 11v) de l'articulation cardan (11'). L'axe longitudinal (21a) de la fusée de roue (21) réalise un troisième axe pour l'articulation arrière (11). La direction d'avance, représentée sur la figure 3, est avantageusement parallèle à l'axe longitudinal (21a) de la fusée de roue (21).

Selon une caractéristique importante, ledit bâti (12) pivote autour de la fusée de roue (21) grâce à une couronne (29). Ladite couronne (29) est liée audit bâti (12) au moyen d'une articulation (30). L'articulation présente un axe (30a) transversal à la direction d'avance (5). L'articulation (30) est avantageusement une articulation du type pivot.

Lors de la modification du déport du premier corps de labour (7), ledit bâti (12) se rapproche ou s'éloigne dudit timon (10) à l'avant sous l'effet du vérin de réglage du déport (19) et pivote, à l'arrière, autour dudit deuxième axe (11v) de l'articulation cardan (11').

Selon une caractéristique importante de la présente invention, l'axe (30a) de l'articulation pivot (30), liant ledit bâti (12) à ladite fusée de roue (21), est concourant à au moins un desdits axes (11h, 11v) de ladite articulation arrière (11). Les axes (30a ; 11h, 11v) sont avantageusement concourants en un point (11").

Dans une réalisation particulière de l'invention, en labour hors raie, l'axe (30a) de l'articulation pivot (30) et le deuxième axe (11v) sont confondus.

Grâce à la disposition des axes (30a, 11h, 11v), lesdites articulations correspondantes sont concentrées au niveau de l'articulation arrière (11).

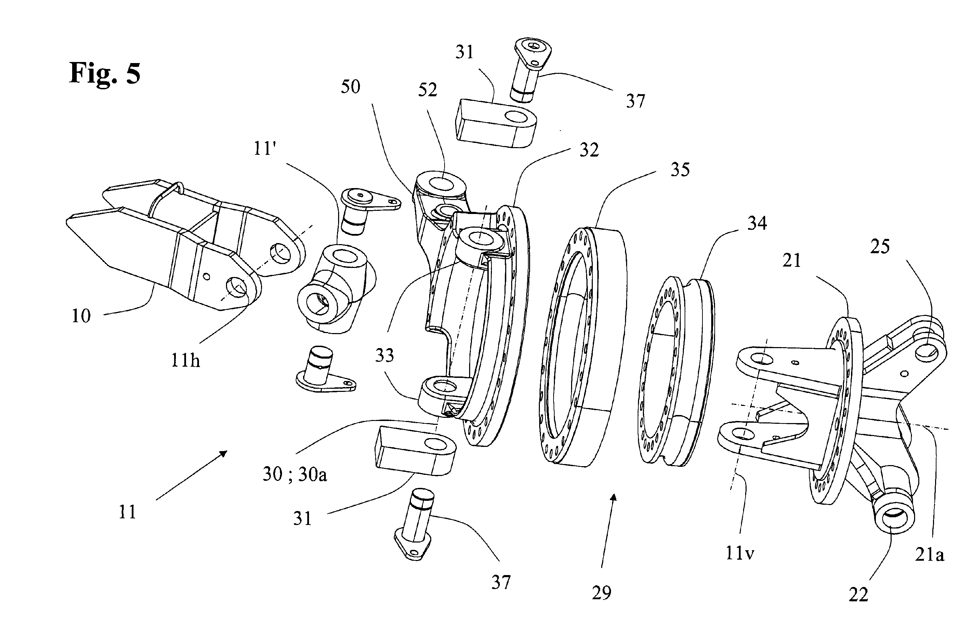

A l'image des figures 3 et 5, le bâti (12) est avantageusement pourvu d'un bras (31) disposé sensiblement perpendiculairement audit bâti (12) et dans la direction de la fusée de roue (21). Ledit bras (31) est solidaire dudit bâti (12). Ce bras (31) est lié à ladite couronne (29) par l'intermédiaire d'une noix (32). Ladite noix (32) comporte, sur sa face avant, des oreilles (33) permettant de relier ladite noix (32) audit bras (31) du bâti (12).

Selon l'exemple de réalisation représenté sur les figures 5 et 6, ladite couronne (29) est constituée, d'une manière avantageuse, d'une bague intérieure (34) et d'une bague extérieure (35). Entre ces deux bagues (34, 35) sont avantageusement logées des éléments roulant (non représentés). Lesdites bagues (34, 35) comportent donc chacune un évidemment respectif permettant le logement desdits éléments roulant. Dans la réalisation de la figure 5, les éléments roulant sont avantageusement des billes. D'une manière particulièrement avantageuse, la couronne (29) réalise ainsi la fonction d'un roulement.

Les dispositifs d'appui (28d, 28g) comporte chacun une butée respective liée avantageusement à ladite bague extérieure (35). Sur ces butées viennent s'appuyer lesdites vis afin de limiter la profondeur de labour de la charrue (1).

La fusée de roue (21) et la noix (32) sont fixées à la couronne (29) par tous moyens connus, par exemple au moyen de boulons. La bague intérieure (34) est liée à ladite fusée de roue (21) au moyen d'une première série de boulons (36') alors que la bague extérieure (35) est liée à la noix (32) au moyen d'une deuxième série de boulons (36"). Le diamètre extérieur de la couronne (29) est sensiblement voisin à celui de la noix (32). La couronne (29) et la noix (32) comportent avantageusement un diamètre extérieur identique. Ce diamètre est supérieur au diamètre de la fusée de roue (21).

Lors de l'opération de retournement, ce sont le bâti (12), la noix (32) et la bague extérieure (35) de la couronne (29) qui pivotent autour du timon (10), de ladite fusée de roue (21) et de ladite bague intérieure (34). La noix (32) comporte à cet effet deux oreilles (33) disposées de manière à être diamétralement opposées. L'articulation pivot (30) entre le bras (31) du bâti (12) et les oreilles (33) de la noix (32) est réalisée par des broches (37). Lesdites broches (37) comportent des arrêts en rotation. Lesdites oreilles (33) sont positionnées sur la face avant de la noix (32) de manière à ce que l'axe (30a) soit confondu avec un desdits axes (11h, 11v). Par ailleurs, les oreilles (33) sont disposées de manière à être sensiblement vertical dans une position de travail. L'axe (30a) de l'articulation pivot (30) est avantageusement vertical lorsque la charrue (1) est dans une configuration de labour hors raie alors que dans la configuration de transport, l'axe (30a) est sensiblement horizontal. Ainsi, en labour hors raie, l'axe (30a) est sensiblement confondu avec l'axe vertical (11v) de l'articulation cardan (11') et au transport l'axe (30a) est sensiblement confondu avec l'axe horizontal (11h) de l'articulation cardan (11'). Les deux oreilles (33) sont encore localisées sur la noix (32) de manière à ce que la distance les séparant permette le pivotement du bras (31) sans interférence avec ladite articulation cardan (11'). Dans la configuration de travail, les oreilles (33) se trouvent donc respectivement quelque peu au-dessus et quelque peu en dessous de ladite articulation cardan (11').

D'une manière particulièrement avantageuse, la charrue (1) de l'invention est une charrue à largeur variable. Chaque corps de labour (7) est donc avantageusement lié audit bâti (12) au moyen d'une articulation respective (38) comme représenté sur la figure 2. Lesdits corps de labour (7) peuvent pivoter autour de leurs articulations respectives (38) de manière travailler une bande de terre de largeur différente. Lesdites articulations (38) comportant chacune un axe longitudinal au moins sensiblement vertical lorsque ladite charrue (1) est dans une configuration de travail. Les corps de labour (7) sont reliés entre eux, d'une manière connue de l'homme de l'art, par une tringlerie de commande (39) de telle manière que leur largeur de coupe de chacun soit augmentée ou diminuée simultanément. La tringlerie de commande (39) des corps de labour (7) est sensiblement parallèle audit bâti (12) et est avantageusement intégrée dans le bâti (12). Ledit bâti (12) étant réalisé sous forme d'une poutre creuse.

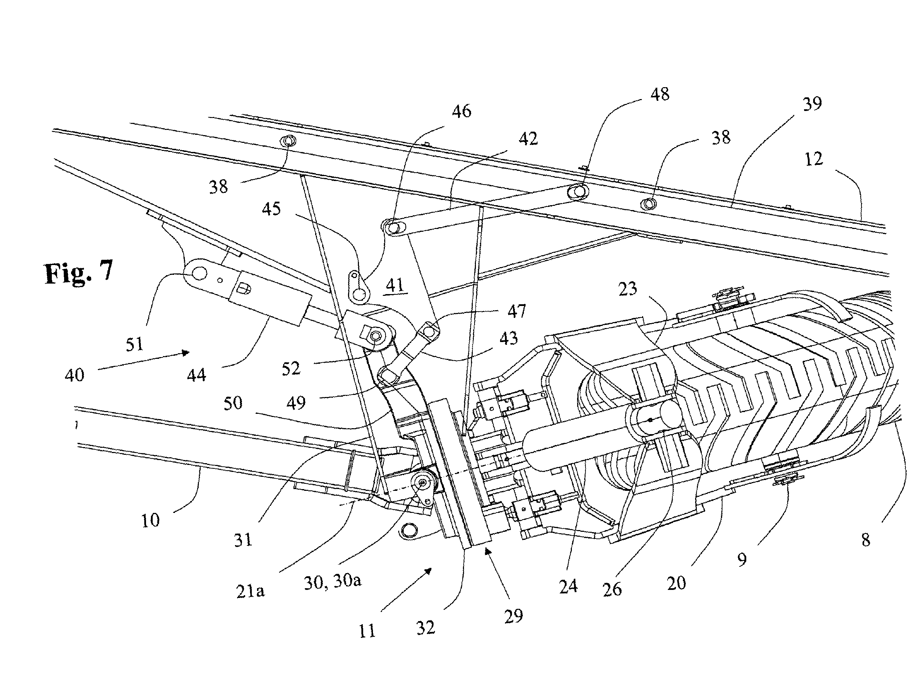

D'après la figure 7, l'orientation des corps de labour (7) ou la largeur de coupe des corps de labour (7) est gérée par un mécanisme de commande (40) liée à la tringlerie de commande (39). Pour travailler dans des conditions optimales, la roue d'appui (8) doit toujours être parallèle aux corps de labour (7). Ainsi, le mécanisme de commande (40) est également relié à ladite roue d'appui (8). D'une manière préférentielle, le mécanisme de commande (40) comporte un palonnier (41), au moins une tringle (42), au moins une bielle (43) et un vérin de commande (44). Le palonnier (41) présente une forme triangulaire comportant à son sommet un point d'articulation fixe (45) et deux points d'articulations mobiles (46, 47). Ledit palonnier (41) est avantageusement un triangle isocèle. Le point d'articulation fixe (45) relie avantageusement ledit palonnier (41) audit bras (31) tandis que les deux points d'articulations mobiles (46, 47) sont liés respectivement à au moins une desdites tringles (42) et à au moins une desdites bielles (43). De préférence, le mécanisme de commande (40) comporte deux tringles (42) et deux bielles (43). Les tringles (42) et les bielles (43) sont disposées de part et d'autre dudit palonnier (41).

Les tringles (42) sont fixées à leurs autres extrémités à la tringlerie de commande (39) des corps de labour (7) via une quatrième articulation (48). Les bielles (43) sont, pour leur part, liées à leurs autres extrémités à la noix (32) par l'intermédiaire d'une cinquième articulation (49). La cinquième articulation (49) est disposée sur une patte (50). Ladite patte (50) est solidaire de la noix (32). La patte (50) est disposée vers ledit bâti (12) dans la direction dudit bras (31). Le mécanisme de commande (40) est avantageusement commandé par ledit vérin de commande (44). Ce vérin de commande (44) est lié d'une part audit bâti (12) via une sixième articulation (51) et est lié d'autre part à ladite patte (50) de la noix (32) par l'intermédiaire d'une septième articulation (52). Les articulations (45, 46, 47, 48, 49, 51, 52) comportent toutes, un axe longitudinal sensiblement perpendiculaire à la direction d'avance (5) et sont parallèles entre elles.

Lorsque le vérin de commande (44) est actionné pour modifier la largeur de coupe des corps de labour (7), l'orientation de la roue d'appui (8) est modifiée simultanément. La roue d'appui (8) n'est pas libre au travail, elle roule au sol et reste parallèle aux corps de labour (7), elle se réoriente lors d'un réglage de la largeur de coupe des corps de labour (7). Ladite roue d'appui (8) passe d'une position à sa position symétrique lors du retournement de la charrue (1).

Selon l'exemple de réalisation représenté sur la figure 7, la largeur de coupe des corps de labour (7) est réglée au maximum, c'est à dire une largeur de coupe de 20". Lorsque l'utilisateur veut passer de la largeur de coupe maximum à une largeur de coupe inférieure, il actionne, via un dispositif hydraulique, le vérin de commande (44). Un tel dispositif hydraulique est connu en soi. Le vérin de commande (44) se rallonge entraînant une modification de l'orientation de la roue d'appui (8) et par conséquent une modification de la largeur de coupe des corps de labour (7). Lorsque le vérin de commande (44) se rallonge, la patte (50) de la noix (32) se rapproche alors du palonnier (41) et la fusée de roue (21) pivote légèrement autour dudit axe vertical (11v). Le palonnier (41), quant à lui, bascule autour dudit point d'articulation fixe (45) dans le sens contraire des aiguilles d'une montre ce qui provoque un mouvement de la tringlerie de commande (39) des corps de labour (7) vers l'avant. La largeur de coupe minimum des corps de labour (7) est de 14".

D'une manière particulièrement avantageuse, ledit mécanisme de commande (40) est entièrement intégré dans ledit bras (31) permettant ainsi une protection accrue contre les agressions extérieures tel que la terre ou les chocs engendrés par des pierres.

D'une manière préférentielle, la roue d'appui (8) est disposée, par rapport audit bâti (12), de manière à ce que le dernier corps de labour (7) recouvre le passage de ladite roue d'appui (8). D'une manière générale, la roue d'appui (8) est parallèle aux corps de labour (7) par la cinématique du mécanisme de commande (40). Il est aussi envisageable que la cinématique dudit mécanisme de commande (40) soit réalisée tel que la roue d'appui (8) soit décalée angulairement par rapport à l'axe (30a) de l'articulation pivot (30). L'axe longitudinal (21a) de la fusée de roue (21) est décalé angulairement par rapport à l'axe (30a). Il est encore concevable que ce décalage angulaire soit réglable via la cinématique du mécanisme de commande (40). Un tel décalage angulaire permet que la roue d'appui (8) soit poussée vers le labour.

Il est bien évident que l'invention n'est pas limitée aux modes de réalisation décrit ci-dessus et représentés sur les dessins annexés. Des modifications restent possibles, notamment en ce qui concerne la constitution ou le nombre d'éléments ou par substitution d'équivalents techniques, sans pour autant sortir du domaine de protection tel que défmi dans les revendications.

Il est aussi envisageable que le réglage de la profondeur de travail des corps de labour (7) soit effectué à l'aide de deux vérins hydrauliques. Un vérin hydraulique est ainsi actif lors du labour à droite et l'autre est actif lors du labour à gauche.

## Revendications

1. Charrue (1) réversible semi-portée formée par :
* un avant-train (2) destiné à être lié à un véhicule moteur et
* un arrière-train (3) comportant :
■ une roue d'appui (8),
■ un timon (10) lié à ladite roue d'appui (8) au moyen d'une articulation arrière (11) et d'une fusée de roue (21), ladite articulation arrière (11) comportant un premier et un deuxième axes (11h, 11v), et
■ un bâti (12) équipé de corps de labour (7), ledit bâti (12) est lié à ladite fusée de roue (21) au moyen d'une articulation pivot (30),
***caractérisée par le fait* que** l'axe (30a) de l'articulation pivot (30), liant ledit bâti (12) à ladite fusée de roue (21), est concourant à un des axes (11h, 11v) de ladite articulation arrière (11).

2. Charrue selon la revendication 2, ***caractérisée par le fait* que** l'axe (30a) de l'articulation pivot (30) est confondu à un des axes (11h, 11v) de ladite articulation arrière (11).

3. Charrue selon la revendication 2 ou 3, ***caractérisée par le fait* que** ladite articulation arrière (11) est une articulation du type cardan (11').

4. Charrue selon l'une quelconque des revendications 1 à 3, ***caractérisée par le fait* que** ladite articulation du type cardan (11') présente un axe au moins sensiblement vertical (11v) et un axe au moins sensiblement horizontal (11h).

5. Charrue selon l'une quelconque des revendications 1 à 4, ***caractérisée par le fait* que** l'axe (30a) de ladite articulation pivot (30) est au moins sensiblement confondu avec l'axe horizontal (11h) de ladite articulation du type cardan (11') dans la position de transport de ladite charrue (1).

6. Charrue selon l'une quelconque des revendications 1 à 5, ***caractérisée par le fait* que** ladite fusée de roue (21) présente un axe longitudinal (21a) réalise un troisième axe pour ladite articulation arrière (11).

7. Charrue selon la revendication 6, ***caractérisée par le fait* que** l'axe longitudinal (21a) est concourant à au moins un des axes (11h, 11v, 30a).

8. Charrue selon l'une quelconque des revendications 1 à 7, ***caractérisée par le fait* que** ledit bâti (12) est lié à ladite fusée de roue (21) par l'intermédiaire d'une couronne (29).

9. Charrue selon la revendication 8, ***caractérisée par le fait* que** ladite couronne (29) comporte une bague intérieure (34) et une bague extérieure (35).

10. Charrue selon la revendication 8 ou 9, ***caractérisée par le fait* qu'**au moins un élément roulant est logé entre ladite bague intérieure (34) et ladite bague extérieure (35).

11. Charrue selon l'une quelconque des revendications 8 à 10, ***caractérisée par le fait* que** ladite couronne (29) réalise la fonction d'un roulement.

12. Charrue selon l'une quelconque des revendications 8 à 11, ***caractérisée par le fait* que** ladite couronne (29) comporte une noix (32).

13. Charrue selon la revendication 12, ***caractérisée par le fait* que** ladite noix (32) tourne autour de ladite fusée de roue (21) lorsque ladite charrue (1) passe d'une position à une autre.

14. Charrue selon la revendication 12 ou 13, ***caractérisée par le fait* que** ladite noix (32) comporte des oreilles (33).

15. Charrue selon la revendication 14, ***caractérisée par le fait* que** ladite articulation pivot (30) est réalisée par l'intermédiaire desdites oreilles (33) et de broches (37).

16. Charrue selon l'une quelconque des revendications 1 à 15, ***caractérisée par le fait* que** la charrue (1) comporte un dispositif d'appui (28d) pour le labour à droite et un dispositif d'appui (28g) pour le labour à gauche.

17. Charrue selon l'une quelconque des revendications 1 à 16, ***caractérisée par le fait* que** la fusée de roue (21) est liée à une tringlerie de commande de la largeur de coupe (39) desdits corps de labour (7) au moyen de ladite noix (32).

18. Charrue selon la revendication 17, ***caractérisée par le fait* que** ladite noix (32) est reliée à ladite tringlerie de commande (39) par l'intermédiaire d'un mécanisme de commande (40).

19. Charrue selon la revendication 18, ***caractérisée par le fait* que** ledit mécanisme de commande (40) comporte un palonnier (41), au moins une tringle (42), au moins une bielle (43) et un vérin de commande (44).

20. Charrue selon la revendication 19, ***caractérisée par le fait* que** ledit palonnier (41) présente une forme triangulaire.

21. Charrue selon l'une quelconque des revendications 1 à 20, ***caractérisée par le fait* que** ladite roue d'appui (8) est décalée angulairement par rapport à l'axe (30a) de ladite articulation pivot (30).
